# EUROPÄISCHE PATENTSCHRIFT

(11) **EP 0 680 430 B1**
(45) Veröffentlichungstag und Bekanntmachung des Hinweises auf die Patenterteilung: **28.08.1996**
(21) Anmeldenummer: 94905680.8
(22) Anmeldetag: 22.01.1994
(51) Int. Cl.: B62D 3/12, F16B 21/18

(54) **ZAHNSTANGENLENKGETRIEBE, INSBESONDERE FÜR KRAFTFAHRZEUGE**
RACK-AND-PINION STEERING GEAR, IN PARTICULAR FOR MOTOR VEHICLES
BOITE DE DIRECTION A CREMAILLERE, NOTAMMENT POUR AUTOMOBILES

(30) Priorität: 28.01.1993 DE 4302309
(43) Veröffentlichungstag der Anmeldung: 08.11.1995
(73) Patentinhaber: ZF FRIEDRICHSHAFEN Aktiengesellschaft, D-88038 Friedrichshafen (DE)
(72) Erfinder: RUPP, Arthur, D-73460 Hüttlingen (DE)
(86) Internationale Anmeldenummer: EP9400166
(87) Internationale Veröffentlichungsnummer: WO9416931

(56) Entgegenhaltungen:
- EP-A- 0 124 418
- CH-A- 358 633
- DE-A- 2 001 478
- DE-B- 1 016 507
- DE-C- 852 571
- DE-C- 898 933
- GB-A- 2 054 795
- PATENT ABSTRACTS OF JAPAN vol. 002, no. 060 (M-018)28. April 1978 & JP,A,53 023 435 (TOYOTA MOTOR CORP) 3. März 1978
- PATENT ABSTRACTS OF JAPAN vol. 016, no. 576 (M-1345)16. Dezember 1992 & JP,A,04 224 464 (TOYODA MACH WORKS LTD) 13. August 1992
- PATENT ABSTRACTS OF JAPAN vol. 006, no. 193 (M-160)2. Oktober 1982 & JP,A,57 099 466 (YAMADA SEISAKUSHO:KK) 21. Juni 1982

## Beschreibung

Die Erfindung betrifft ein Zahnstangenlenkgetriebe, insbesondere für Kraftfahrzeuge, nach dem Oberbegriff des ersten Anspruchs.

In derartigen Lenkgetrieben trägt die Lenkspindel ein Antriebsritzel, das in eine quer zur Lenkspindel angeordnete, axial verschiebliche Zahnstange eingreift. Zum Abstützen der Zahnstange und zum Andrücken in das Antriebsritzel ist ein in einer Gehäusebohrung gehaltenes Druckstück vorgesehen, welches unter Federkraft am Rücken der Zahnstange anliegt. Das Druckstück stützt sich über einen Anschlag im Gehäuse ab. Als Anschlag ist ein in einer Gehäusebohrung verankerter Schnappring und ein an diesem gehaltenes Stützteil vorgesehen.

In einem aus der EP-A-0 124 418 bekannten Lenkgetriebe liegt auf dem Schnappring als Stützteil eine Scheibe, an der sich eine Feder abstützt, die das Druckstück an der Zahnstange klapperfrei in Anlage hält. Eine derartige Druckstückabstützung hat bereits einen sehr einfachen Aufbau, jedoch muß für die Spieleinstellung sowohl die Dicke des Schnappringes, als auch die Dicke der Scheibe gemessen werden. Hinzu kommt, daß die Scheibe montiert und bei der Schnappring-Montage gehalten werden muß.

Der Erfindung liegt die Aufgabe zugrunde, eine kostengünstige und federnd nachgiebige Druckstückabstützung zu finden, die weniger und einfach zu montierende Bauteile benötigt. Eine solche Ausführung soll sich besonders für die Großserienfertigung von Zahnstangenlenkungen kleinerer PKW eignen.

Diese Aufgabe ist durch die im Anspruch 1 angeführten Merkmale gelöst. Vorteilhafte Weiterbildungen und Ausführungsformen enthalten die Ansprüche 2 bis 6.

Die Druckstückabstützung nach der Erfindung hat als Stützteil mindestens einen mit dem Schnappring fest verbundenen zur Druckstückmitte gerichteten Steg. Dieser Steg ersetzt die beim Stand der Technik vorhandene Scheibe. Führt man den Steg mit ausreichender Steifigkeit aus, so kann sich an diesem ein Federelement zum Andrücken des Druckstücks abstützen. In diesem Falle benötigt man daher nur zwei Bauteile für die Druckstückabstützung: Den Schnappring und eine Feder. Man kann den mit dem Schnappring verbundenen Steg auch elastisch ausführen. Der Steg stützt dann das Druckstück unmittelbar ab und übernimmt gleichzeitig die Funktion des Federelements. Man benötigt für die Druckstückabstützung somit nur ein einziges Bauteil. Der Schnappring ist in einer Nut der Druckstück-Gehäusebohrung verankert. Das Druckstückspiel läßt sich durch die Auswahlmontage von Schnappringen unterschiedlicher Dicke leicht einstellen.

In einer Ausführung ist im Zentrum des Schnappringes als Steg eine kreisförmige Platte angeformt, die durch eine Einschnürung mit dem Schnappring verbunden ist. Der Steg liegt dabei in der selben Ebene wie der Schnappring und dient als Stützteller entweder für das Federelement oder das Druckstück. Da man bei unmittelbarer Abstützung des Druckstückes für die Abstützung nur ein Bauteil benötigt, ist die Lagerhaltung einfacher und die Fertigungskosten sind geringer.

Das Stützteil kann auch mit sternförmig zum Schnappring sich erstreckenden Stegen ausgeführt sein, die auf Vorsprüngen des Schnappringes aufliegen. Dabei ist einer der Stege an einem Vorsprung befestigt. Diese Ausführung eignet sich für die Abstützung des Druckstücks über ein Federelement.

Nach einer weiteren Ausführung können am Schnappring im gleichen Abstand zueinanderliegende, nach innen vorstehende Stege vorgesehen sein, auf denen sich das Federelement abstützt. Die Schnappringe mit den innenliegenden Federstützen lassen sich durch Feinstanzen und nachfolgendes Härten preiswert herstellen.

Schließlich umfasst die Erfindung noch eine weitere Ausführungsform mit einem in den Schnappring integrierten Federelement. Zu diesem Zweck ist ein an den Schnappring angeformter Steg vorgesehen, der sich bis in das Zentrum des Schnappringes erstreckt. Je nach geforderter Federsteife kann der Steg in geringerer oder in gleicher Dicke wie der Schnappring ausgeführt sein. Der Steg liegt an einer Nase des Druckstücks an und drückt dieses in die Zahnstange. Ein separates Federelement kann daher entfallen.

Die Erfindung ist nachfolgend anhand von vier in der Zeichnung dargestellten Ausführungsbeispielen näher erläutert.
Es zeigen:
- Fig. 1: einen Teil-Längsschnitt durch ein Zahnstangenlenkgetriebe;
- Fig. 2: eine Ansicht in Richtung des Pfeiles II in Fig. 1 bei weggelassenem Gehäusedeckel;
- Fig. 3: eine Ansicht auf eine Variante des Schnappringes mit Stützteller in vergrößerter Darstellung;
- Fig. 4: eine Teil-Ansicht in Richtung des Pfeiles IV der Fig. 3;
- Fig. 5: eine Ansicht einer anderen Variante in vergrößerter Darstellung;
- Fig. 6: einen Schnitt gemäß Fig. 1 einer weiteren Variante und
- Fig. 7: eine Ansicht in Richtung des Pfeiles VII der Fig. 6.

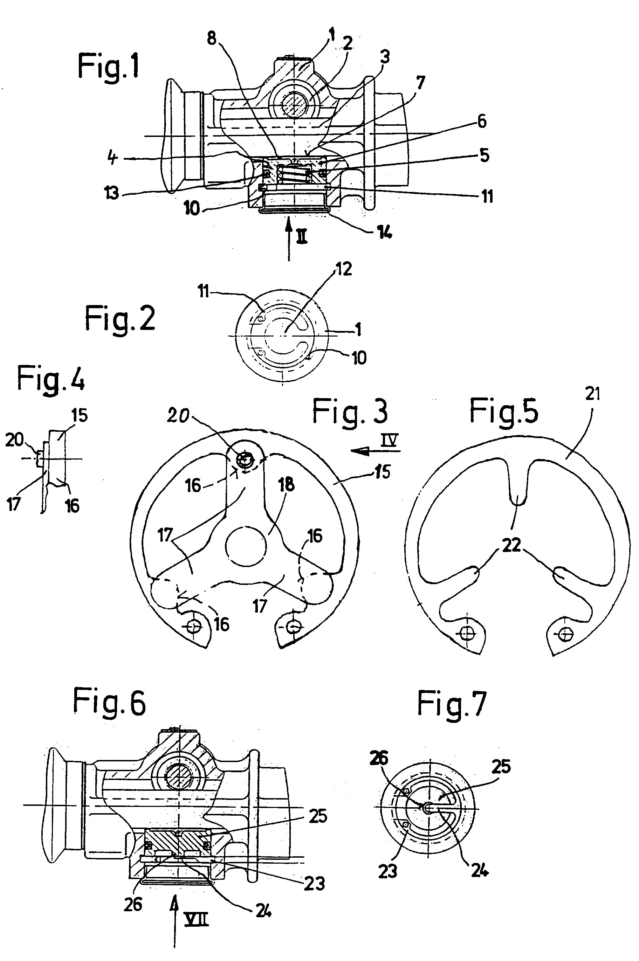

Ein in einem Lenkgehäuse 1 gelagertes, durch ein Lenkhandrad drehbares Antriebsritzel 2 steht mit einer Zahnstange 3 im Eingriff. Die Zahnstange 3 und das diese umgebende Gehäuse 1 ist beiderseits des Antriebsritzels 2 aus Vereinfachungsgründen nicht in der gesamten Länge dargestellt. Auf der dem Antriebsritzel 2 gegenüberliegenden Seite ist in einer Gehäusebohrung 4 ein durch ein Federelement 5 belastetes Druckstück 6 geführt. Das Druckstück 6 hat eine der Zahnstange 3 angepaßte Bettung 7, die mit einer Kunststoffeinlage 8 ausgekleidet ist. Nach der Erfindung stützt sich das Druckstück 6 gegen einen in eine Nut 10 der Gehäusebohrung 4 eingesetzten Schnappring 11 ab. Wie aus Fig. 2 zu ersehen, hat der Schnappring 11 einen angeformten Stützteller 12, gegen welchen sich das Federelement 5 abstützt. Zum Spielausgleich kann man Schnappringe 11 unterschiedlicher Dicke (Stufung 0,05 mm) in die Nut 10 einsetzen. Man wählt also bei der Montage einen auf die jeweilige Fertigungstoleranz abgestimmten Schnappring 11 aus. In das Druckstück 6 kann man zur besseren Dämpfung seiner Axialbewegungen einen Dichtring 13 einsetzen. Die Gehäusebohrung 4 verschließt man durch einen Deckel 14.

Die Fig. 3 und 4 zeigen einen abgewandelten Schnappring 15, der Vorsprünge 16 aufweist. Die Vorsprünge 16 dienen als Auflager für Stege 17 eines sternförmigen Stütztellers 18, der gleichfalls zur Abstützung eines Federelements 5 (Fig. 1) dient. Zweckmäßig fixiert man den Stützteller 18 an einem der Stege 17 an dem Schnappring 15 durch einen Niet 20 oder dergleichen.

Ein Schnappring 21 nach Fig. 5 weist zur Abstützung des Federelements im gleichen Abstand zueinanderliegende, nach innen gerichtete Stege 22 auf.

In Fig. 6 und 7 ist ein Federelement in einen Schnappring 23 integriert. Der Schnappring 23 weist als Federelement einen angeformten Steg 24 auf, der sich bis in sein Zentrum erstreckt. Zur Erzielung einer ausreichenden Elastizität kann der Steg 24 eine geringere Dicke als der Schnappring 23 haben. Der Steg 24 hat die Funktion einer Biegefeder. Ein Druckstück 25 hat eine in der Mitte gelegene Nase 26, an welcher der Steg 24 unter Vorspannung anliegt.

### Bezugszeichen

- 1: Lenkgehäuse
- 2: Antriebsritzel
- 3: Zahnstange
- 4: Gehäusebohrung
- 5: Federelement
- 6: Druckstück
- 7: Bettung
- 8: Kunststoffeinlage
- 9: -
- 10: Nut
- 11: Schnappring
- 12: Stützteller
- 13: Dichtring
- 14: Deckel
- 15: Schnappring
- 16: Vorsprünge
- 17: Stege
- 18: Stützteller
- 19: -
- 20: Niet
- 21: Schnappring
- 22: Stege
- 23: Schnappring
- 24: Steg
- 25: Druckstück
- 26: Nase

## Patentansprüche

1. Zahnstangenlenkgetriebe, insbesondere für Kraftfahrzeuge, mit folgenden Merkmalen:
- eine Lenkspindel trägt ein Antriebsritzel (2), welches in eine quer zur Lenkspindel angeordnete, axial verschiebliche Zahnstange (3) eingreift;
- die Zahnstange (3) ist in einer Bettung eines im Lenkgehäuse gelagerten, durch ein Federelement gegen den Rücken der Zahnstange (3) gedrückten Druckstückes (6) geführt;
- das Druckstück (6) ist in einer Gehäusebohrung (4) geführt und stützt sich an einem Anschlag ab;
- als Anschlag ist ein in der Gehäusebohrung (4) verankerter Schnappring (11) und ein von diesem gehaltenes Stützteil vorgesehen,
**gekennzeichnet** durch folgendes Merkmal: als Stützteil für das Federelement bzw. das Druckstück ist mindestens ein mit dem Schnappring (11) fest verbundener, nach innen gerichteter Steg (12) vorgesehen.

2. Zahnstangenlenkgetriebe nach Anspruch 1, **gekennzeichnet** durch folgende Merkmale:
- der Steg (12) besteht aus einer nahezu kreisförmigen, mit dem Schnappring (11) einstückigen Platte, die durch eine Einschnürung mit dem Schnappring verbunden ist und
- der Steg (12) liegt in derselben Ebene wie der Schnappring (11).

3. Zahnstangenlenkgetriebe nach Anspruch 1, dadurch **gekennzeichnet,** daß zum Spielausgleich Schnappringe (11) unterschiedlicher Dicke in eine Nut (10) einsetzbar sind.

4. Zahnstangenlenkgetriebe nach Anspruch 1, **gekennzeichnet** durch folgende Merkmale:
- das Stützteil hat sternförmig zum Schnappring (15) sich erstreckende Stege (17);
- die Stege (17) liegen auf Vorsprüngen (16) des Schnappringes auf und
- einer der Stege (17) ist an einem Vorsprung (16), z. B. durch eine Niet (20), befestigt (Fig. 3).

5. Zahnstangenlenkgetriebe nach Anspruch 1, dadurch **gekennzeichnet,** daß das Stützteil des Schnappringes (21) aus mehreren in gleichen Abständen zueinanderliegenden, nach innen vorstehenden Stegen (22) besteht (Fig. 5).

6. Zahnstangenlenkgetriebe nach Anspruch 1, dadurch **gekennzeichnet,** daß sich der an dem Schnappring (23) angeformte Steg (24) bis in das Zentrum des Schnappringes erstreckt und an einer in der Mitte des Druckstückes (25) gebildeten Nase (26) federnd anliegt (Fig. 6, 7).

## Claims

1. Rack-and-pinion steering gear, particularly for motor vehicles, with the following attributes:
- a steering spindle carries a driving pinion (2) which engages in an axially displaceable tooth rack (3) which is disposed transversely relative to the steering spindle;
- the toothed rack (3) is guided in a bedding of a pressure piece (6) which is mounted in the steering housing and pressed against the back of the toothed rack (3) by a spring element;
- the pressure piece (6) is guided in a housing bore (4) and is supported on a stop;
- the stop provided is a snap ring (11) anchored in the housing bore (4) and a support part carried by the snap ring,
characterized by the following attribute: the support part provided for the spring element or the pressure piece is at least one inwardly aligned web (12) which is fixed to the snap ring (11).

2. Rack-and-pinion steering gear according to Claim 1, characterized by the following attributes:
- the web (12) consists of an almost circular plate which forms a single piece with the snap ring (11) and is joined to the snap ring through a constriction, and
- the web (12) lies in the same plane as the snap ring (11).

3. Rack-and-pinion steering gear according to Claim 1, characterized in that snap rings (11) of different thicknesses can be inserted into a groove (10) for the purpose of compensating play.

4. Rack-and-pinion steering gear according to Claim 1, characterized by the following attributes:
- the support part has webs (17) which extend in a star configuration relative to the snap ring (15);
- the webs (17) are supported on projections (16) of the snap ring, and
- one of the webs (17) is fastened to a projection (16) by means of, for example, a rivet (20), (Fig. 3).

5. Rack-and-pinion steering gear according to Claim 1, characterized in that the support part of the snap ring (21) consists of several inwardly projecting webs (22) located equidistantly from one another (Fig. 5).

6. Rack-and-pinion steering gear according to Claim 1, characterized in that the web (24) formed on the snap ring (23) extends into the centre of the snap ring and resiliently adjoins a nose (26) formed in the middle of the pressure piece (25) (Fig. 6, 7).

## Revendications

1. Boîte de direction à crémaillère, notamment pour véhicule automobile, avec les caractéristiques suivantes:
- un arbre de direction porte un pignon d'entraînement (2) qui engrène une crémaillère (3) axialement coulissante, disposée transversalement à l'arbre de direction;
- la crémaillère (3) est disposée dans un logement ménagé dans le boîtier de direction, poussé contre une pièce d'appui (6) appuyée contre le dos de la crémaillère par un élément à ressort;
- la pièce d'appui (6) est guidée dans un alésage du boîtier (4) et prend appui contre une butée;
- la butée est constituée par un anneau encliquetable (11) ancré dans l'alésage du boîtier (4) et par une pièce de soutien maintenue par cet anneau, **caractérisée** en ce que:
la pièce de soutien de l'élément à ressort, respectivement la pièce d'appui, est au moins constituée par une tige (12) orientée vers l'intérieur et rigidement fixée audit anneau encliquetable (11).

2. Boîte de direction selon la revendication 1, **caractérisée** par les caractéristiques suivantes:
- la tige (12) consiste en une plaque faite d'une pièce avec l'anneau encliquetable (11) et approximativement circulaire, cette plaque étant liée par un étranglement audit anneau encliquetable, et
- la tige (12) est disposée dans le même plan que l'anneau encliquetable (11).

3. Boîte de direction selon la revendication 1, **caractérisée** en ce que pour compenser le jeu des anneaux encliquetables (11), de différentes épaisseurs peuvent être insérées dans une rainure (10).

4. Boîte de direction selon la revendication 1, **caractérisée** par les caractéristiques suivantes:
- la pièce de soutien comporte des tiges (17) s'étendant en étoile par rapport à l'anneau encliquetable (15);
- les tiges (17) sont posées sur des protubérances (16) de l'anneau encliquetable, et
- une des tiges (17) est fixée par exemple par un rivet (20) (fig. 3) à une protubérance (16).

5. Boîte de direction selon la revendication 1, **caractérisée** en ce que la pièce de soutien de l'anneau encliquetable (21) se compose de plusieurs tiges (22) orientées vers l'intérieur, disposées de façon équidistantes (fig. 5).

6. Boîte de direction selon la revendication 1, **caractérisée** en ce que la tige (24) solidaire de l'anneau encliquetable (23) s'étend jusqu'au centre de cet anneau et s'appuie élastiquement contre un nez (26) conformé au centre de la pièce d'appui (25) (fig. 6, 7).
